# EUROPÄISCHE PATENTANMELDUNG

(11) **EP 4 796 423 A1**
(43) Veröffentlichungstag der Anmeldung: **26.08.2026**
(21) Anmeldenummer: 26158381.9
(22) Anmeldetag: 13.02.2026
(51) Int. Cl.: B62J 45/411, B62J 50/20, B62M 6/45

(54) **VERFAHREN ZUM BETREIBEN EINES ELEKTROFAHRRADS**

(30) Priorität: 25.02.2025 DE 102025107006
(71) Anmelder: Robert Bosch GmbH, 70442 Stuttgart (DE)
(72) Erfinder: HOFMANN, Franz, 74354 Besigheim (DE); GOEBEL, Gregor, 72116 Moessingen (DE)

(57) **Zusammenfassung**

Die vorliegende Erfindung betrifft ein Verfahren (20) zum Betreiben eines Elektrofahrrads (100), wobei das Elektrofahrrad (100) ein Sensorsystem (50) mit einen Drehmomentsensor (55) umfasst, umfassend die Schritte: Ermitteln (2) eines Drehmoments an einer Welle (101) des Elektrofahrrads mittels des Drehmomentsensors (55), gesteuertes Betreiben (21) einer Antriebseinheit (105) des Elektrofahrrads (100) in Abhängigkeit des ermittelten Drehmoments, Ermitteln (31) einer Unterstützungsunterbrechung der Antriebseinheit (105) während des gesteuerten Betreibens (21), und Ausgabe (32) einer Information über die ermittelte Unterstützungsunterbrechung mittels einer Ausgabeeinheit (108) an einen Nutzer des Elektrofahrrads (100).

## Beschreibung

### Stand der Technik

Die vorliegende Erfindung betrifft ein Verfahren zum Betreiben eines Elektrofahrrads, und ein Elektrofahrrad.

Bekannt sind Elektrofahrräder mit Sensorsystemen, welche Drehmomentsensoren aufweisen. Basierend auf Erfassung und Auswertung von physikalischen Größen mittels des Drehmomentsensors kann dabei ein momentanes Drehmoment an einer Tretwelle des Elektrofahrrads bestimmt werden. Häufig wird eine Motorunterstützung des Elektrofahrrads basierend auf dem erfassten Drehmoment geregelt. Bei starken äußeren Einflüssen, wie beispielsweise veränderlichen externen Magnetfeldern, können dabei Abweichungen bei der Erfassung des Drehmoments auftreten, welche auch zu unerwünschtem Verhalten der Motorunterstützung führen können.

### Offenbarung der Erfindung

Das erfindungsgemäße Verfahren mit den Merkmalen des Anspruchs 1 zeichnet sich demgegenüber dadurch aus, dass auf einfache und zuverlässige Weise spezielle Betriebszustände der Antriebseinheit eines Elektrofahrrads erfasst werden können, und darauf beispielsweise automatisch reagiert werden kann. Insbesondere kann dadurch ein Nutzerkomfort für einen Nutzer des Elektrofahrrads erhöht werden. Dies wird erfindungsgemäß erreicht durch ein Verfahren zum Betreiben eines Elektrofahrrads, wobei das Elektrofahrrad ein Sensorsystem mit einem Drehmomentsensor umfasst. Das Verfahren umfasst die Schritte:
- Ermitteln eines Drehmoments an einer Welle des Elektrofahrrads mittels des Drehmomentsensors,
- gesteuertes Betreiben einer Antriebseinheit des Elektrofahrrads in Abhängigkeit des ermittelten Drehmoments,
- Ermitteln einer Unterstützungsunterbrechung der Antriebseinheit während des gesteuerten Betreibens, und
- Ausgabe einer Information über die ermittelte Unterstützungsunterbrechung mittels einer Ausgabeeinheit an einen Nutzer des Elektrofahrrads.

Als Unterstützungsunterbrechung wird insbesondere ein Zustand der Antriebseinheit angesehen, in welchem ein antriebsmomentenfreier Zustand der Antriebseinheit vorliegt. Das heißt, während der Unterstützungsunterbrechung wird von der Antriebseinheit kein Motormoment gezielt erzeugt. Beispielsweise erfolgt das Ermitteln der Unterstützungsunterbrechung sensorbasiert und/oder basierend auf einer Ansteuerung der Antriebseinheit, wie beispielsweise mittels eines Betätigungssignals, welches vorzugsweise von einer Steuereinheit bereitgestellt wird.

Vorzugsweise wird eine Unterstützungsunterbrechung dabei nur erkannt, wenn ein unterstützungsfreier Zustand der Antriebseinheit mindestens über eine vordefinierte Zeitspanne vorliegt, welche beispielsweise mindestens 0,1 s beträgt.

Als Information wird bevorzugt eine visuelle und/oder akustische und/oder haptische Information an den Nutzer ausgegeben. Besonders bevorzugt wird als Information ein Text mittels der Anzeigeeinheit dargestellt, welcher den Nutzer gezielt darüber informiert, dass eine Unterstützungsunterbrechung durch das System erkannt wurde.

Mit anderen Worten erfolgt bei dem Verfahren während des Betreibens der Antriebseinheit des Elektrofahrrads in Abhängigkeit eines mittels eines Drehmomentsensors erfassten Drehmoments ein Erkennen von Unterstützungsunterbrechungen der Antriebseinheit. Im Ansprechen auf die erkannte Unterstützungsunterbrechung erfolgt dabei eine Ausgabe einer Information über diese ermittelte Unterstützungsunterbrechung an den Nutzer des Elektrofahrrads.

Das Verfahren zeichnet sich somit dadurch aus, dass gezielt der Nutzer über ermittelte Unterstützungsunterbrechungen beim Betrieb der Antriebseinheit des Elektrofahrrads informiert werden kann. Dabei erfolgt die Erkennung der Unterstützungsunterbrechungen und die entsprechende Informationsausgabe vollautomatisch selbsttätig durch das System. Durch das Bereitstellen der Information kann dem Nutzer dabei auf verbesserte Weise automatisch eine Information über die Betriebsweise des Systems bereitgestellt werden. Dadurch kann beispielsweise die Akzeptanz des Nutzers gegenüber unerwarteten Betriebszuständen, wie insbesondere den Unterstützungsunterbrechungen, erhöht werden. Vorteilhafterweise kann dadurch ermöglicht werden, dass durch die explizite Bereitstellung der Information, dass Unterstützungsunterbrechungen erkannt wurden, die Wahrscheinlichkeit verringert wird, dass der Nutzer bei Erfahrung bestimmter Betriebszustände, wie den Unterstützungsunterbrechungen, diese als Defekte oder Fehlfunktionen des Elektrofahrrads interpretiert. Weiterhin können besonders vorteilhaft Hinweise zum empfohlenen Verhalten des Nutzers gegeben werden, wie beispielsweise, dass bei den erkannten Unterstützungsunterbrechungen ein Weiterpedalieren durch den Nutzer erfolgen soll.

Die Unteransprüche haben bevorzugte Weiterbildungen der Erfindung zum Inhalt.

Bevorzugt ist der Drehmomentsensor als ein magnetoelastischer Sensor ausgebildet und eingerichtet, um basierend auf einer Erfassung von Änderungen eines Magnetfeldes das Drehmoment an der Welle zu ermitteln. Das heißt, der Drehmomentsensor ist eingerichtet, um ein Drehmoment basierend auf dem magnetoelastischen Prinzip zu erfassen. Vorzugsweise umfasst der Sensor mehrere Sensorelemente, welche insbesondere parallel zu einer Axialrichtung der Welle nebeneinander angeordnet sind. Besonders bevorzugt umfasst der Magnetsensor drei identisch ausgebildete Sensorelemente. Damit kann eine besonders präzise und zuverlässige Erfassung des Drehmoments an der Welle mittels einer einfachen und kostengünstigen Konstruktion ermöglicht werden. Beispielsweise können dabei beim Durchfahren von starken und insbesondere zeitlich veränderlichen Magnetfeldern Abweichungen bei der Erfassung des Drehmoments auftreten. Insbesondere können hierdurch Drehmomentfehler entstehen. In der Folge können dabei Drehmomente erfasst werden, welche vom tatsächlichen Drehmoment abweichen und zu der Unterstützungsunterbrechung der Antriebseinheit führen. Durch die Erkennung der Unterstützungsunterbrechungen und der Anzeige der Information können somit dem Nutzer mögliche unerwartete Betriebszustände gezielt als von dem System erkannt übermittelt werden, wodurch das Nutzerkomfort des Elektrofahrrads deutlich erhöht werden kann.

Vorzugsweise umfasst das Verfahren ferner die Schritte:
- Erfassen einer homogenen magnetischen Flussdichte mittels des Drehmomentsensors, und
- Erkennen eines möglichen Drehmomentfehlers des ermittelten Drehmoments, wenn die erfasste homogene magnetische Flussdichte größer oder gleich einen vorbestimmten ersten Schwellwert ist.

Das heißt, wenn die erfasste homogene magnetische Flussdichte den ersten Schwellwert erreicht oder überschreitet, wird erkannt, dass das ermittelte Drehmoment fehlerhaft sein kann. Das heißt, es wird mittels des Drehmomentsensors eine Stärke des momentanen homogenen Magnetfelds erfasst. Wenn dabei erkannt wird, dass ein starkes homogenes Magnetfeld vorliegt, wird ein möglicher Drehmomentfehler angenommen. Insbesondere basiert das Verfahren dabei auf der Annahme, dass bei einem starken homogenen Magnetfeld gleichzeitig ein signifikantes inhomogenes Magnetfeld vorliegt, welches Einfluss auf die Drehmomenterfassung hat. Beispielsweise kann ein starkes inhomogenes Magnetfeld ein Überschätzen des tatsächlichen Drehmoments an der Welle bewirken. Das heißt, bei vorhandenem starken inhomogenen Magnetfeld, liefert der Drehmomentsensor als Messwert ein möglicherweise höheres Drehmoment, als tatsächlich an der Welle vorliegt. Damit kann auf besonders einfache und kostengünstige Weise zuverlässig ermittelt werden, wann bei der Erfassung des Drehmoments an einer Welle des Elektrofahrrads mit Drehmomentfehlern zu rechnen ist. Dabei können einfache und kostengünstige Drehmomentsensoren verwendet werden. Da beispielsweise Drehmomentsensoren häufig nicht direkt inhomogene Magnetfelder erfassen können, kann somit eine alternative besonders einfache und kostengünstige Möglichkeit bereitgestellt werden, mit welcher basierend auf den erfassten homogenen Magnetfeldern das Vorliegen von Drehmomentfehlern abgeschätzt werden kann. Die Kenntnis über die Drehmomentfehler kann dabei beispielsweise weitergenutzt werden, um einen Betrieb des Elektrofahrrads zu optimieren.

Bevorzugt umfasst das gesteuerte Betreiben der Antriebseinheit ein Betreiben der Antriebseinheit in einem Normalmodus, wenn die erfasste homogene magnetische Flussdichte kleiner als ein vorbestimmter zweiter Schwellwert ist, und ein Betreiben der Antriebseinheit in einem Degradationsmodus, wenn die erfasste homogene magnetische Flussdichte größer oder gleich dem vorbestimmten zweiten Schwellwert ist. Bevorzugt entspricht der zweite Schwellwert dem ersten Schwellwert. Im Normalmodus wird dabei das ermittelte Drehmoment als Eingangsgröße einer Antriebseinheits-Steuerung verwendet. Im Degradationsmodus wird ein degradiertes Drehmoment als Eingangsgröße der Antriebseinheits-Steuerung verwendet. Das degradierte Drehmoment ist dabei kleiner als das mittels des Drehmomentsensors ermittelte Drehmoment. Mit anderen Worten wird die Antriebseinheit in zumindest zwei verschiedenen Betriebsmodi betrieben, nämlich dem Normalmodus und dem Degradationsmodus. Im Degradationsmodus wird dabei nicht das tatsächlich mittels des Drehmomentsensors erfasste Drehmoment verwendet als Eingangsgröße für die Steuerung der Antriebseinheit, sondern das degradierte Drehmoment, welches kleiner ist. Das heißt, im Degradationsmodus wird die Steuerung der Antriebseinheit basierend auf einem kleineren Drehmoment durchgeführt. Dadurch wird besonders vorteilhaft der Fall der Überschätzung des mittels des Drehmomentsensors erfassten Drehmoments bei störenden externen Magnetfeldern berücksichtigt. Das heißt, bei erkannten Drehmomentfehler wird das gemessene Drehmoment reduziert, und dieser reduzierte Wert als Basis für die Motorsteuerung verwendet. Insbesondere bei einer Steuerung der Antriebseinheit derart, dass das erzeugte Motormoment proportional zum ermittelten Drehmoment an der Welle ist, wird dadurch vermieden, dass ein unerwünscht überhöhtes Motormoment erzeugt wird oder von der Antriebseinheit ein Drehmoment verarbeitet wird, welches von der magnetischen Störung herrührt. Beispielsweise muss zum Anfahren aus dem Stillstand oder beim Wiedereinsetzen der Motorunterstützung nach einem Ende und einem Wiedereinsetzten eines Pedalierens eine bestimmte Drehmomentschwelle überschritten werden. Im Degradationsmodus kann beispielsweise verhindert werden, dass diese Schwellen durch ein externes Magnetfeld ohne Fahrerwunsch überschritten werden. Somit kann auf besonders einfache und effiziente Weise eine gewisse Betriebssicherheit des Elektrofahrrads erhöht werden.

Besonders bevorzugt wird das degradierte Drehmoment durch Subtrahieren eines vorbestimmten konstanten Degradationsmoments von dem erfassten Drehmoment bestimmt. Vorzugsweise beträgt das konstante Degradationsmoment mindestens 2 Nm, insbesondere maximal 20 Nm. Damit kann das Verfahren besonders einfach, effizient und kostengünstig durchgeführt werden.

Besonders bevorzugt wird das degradierte Drehmoment mittels der folgenden Formel bestimmt: ${T}_{deg} = {T}_{mess} - \left({B}_{mess}-{B}_{limitDeg}\right) ∗ k$ mit dem degradierten Drehmoment *T_{deg}*, dem erfassten Drehmoment *Tₘₑₛₛ*, der erfassten homogenen magnetischen Flussdichte *Bₘₑₛₛ*, dem zweiten Schwellwert *B_{limitDeg},* und einer Konstanten *k.* Insbesondere wird somit eine lineare Funktion für das degradierte Drehmoment in Abhängigkeit der erfassten homogenen magnetischen Flussdichte bereitgestellt. Damit kann bei einfacher und effizienter Durchführung des Verfahrens eine optimale Anpassung des Degradationsmodus hinsichtlich hoher Effektivität bei gleichzeitig hohem Nutzerkomfort ermöglicht werden.

Bevorzugt wird das Ermitteln der Unterstützungsunterbrechung und die Ausgabe der Information, vorzugsweise ausschließlich, während des Degradationsmodus durchgeführt. Das heißt, die Erkennung der Unterstützungsunterbrechungen und die entsprechende Ausgabe der Informationen kann nur im Degradationsmodus erfolgen. Dadurch kann das Verfahren besonders einfach und effizient durchgeführt werden.

Weiter bevorzugt erfolgt die Ausgabe der Information über die ermittelte Unterstützungsunterbrechung, vorzugsweise stets, wenn das ermittelte degradierte Drehmoment kleiner oder gleich einem vorbestimmten Mindest-Drehmoment ist, insbesondere wobei das Mindest-Drehmoment gleich Null ist. Das heißt, die Ausgabe der Information erfolgt automatisch im Ansprechen darauf, dass das degradierte Drehmoment kleiner oder gleich dem Mindest-Drehmoment ist. Insbesondere erfolgt dabei auch das Erkennen der Unterstützungsunterbrechung automatisch stets, wenn das ermittelte degradierte Drehmoment kleiner oder gleich dem vorbestimmten Mindest-Drehmoment, insbesondere von Null, ist. Vorzugsweise entspricht das Mindest-Drehmoment einem Schwellwert, unterhalb welchem die Antriebseinheit-Steuerung ein Motormoment von Null erzeugt. Das heißt, die Information wird nur dann ausgegeben, wenn der spezielle Fall eintritt, dass das Drehmoment durch den Degradationsmodus reduziert wird und wenn währenddessen aufgrund des degradierten Drehmoments kein Motormoment erzeugt wird.

Bevorzugt umfasst das Verfahren ferner den Schritt: Erkennen einer Pedalbetätigung des Elektrofahrrads durch den Nutzer, wobei das Ermitteln der Unterstützungsunterbrechung und die Ausgabe der Information, insbesondere nur, bei erkannter Pedalbetätigung durchgeführt wird. Das heißt, die Ermittlung der Unterstützungsunterbrechung und die Ausgabe der Information hierüber erfolgt nur während einer, insbesondere sensorbasiert, erkannten Pedalbetätigung. Das heißt, die Information wird nur ausgegeben, wenn der Nutzer, insbesondere mit geringem Tretmoment und kleiner Kadenz, pedaliert. Dadurch kann eine unnötige Ausgabe der Information beispielsweise in anderen Fällen in denen kein Motormoment erzeugt wird, verhindert werden.

Vorzugsweise umfasst das Verfahren ferner den Schritt: Erfassen einer Geschwindigkeit des Elektrofahrrads durch den Nutzer, wobei das Ermitteln der Unterstützungsunterbrechung und die Ausgabe der Information, insbesondere nur, durchgeführt wird, wenn die erfasste Geschwindigkeit größer oder gleich einer vorbestimmen Mindest-Geschwindigkeit ist. Insbesondere beträgt die Mindest-Geschwindigkeit mindestens 2 km/h. Damit wird die Informationsausgabe nur bei einer Fahrt des Elektrofahrrads, das heißt wenn sich dieses fortbewegt, bewirkt.

Weiter bevorzugt umfasst das Verfahren ferner den Schritt: Erkennen eines Wiedereinsetzens einer Motorunterstützung der Antriebseinheit, und Erhöhen eines Zählers im Ansprechen auf ein erkanntes Wiedereinsetzen der Motorunterstützung nach einer erkannten Unterstützungsunterbrechung. Dabei erfolgt die Ausgabe der Information nur, wenn der Zähler einen vorbestimmten Zählerwert erreicht oder überschreitet. Beispielsweise weist der vorbestimmte Zählerwert mindestens den Wert 2, insbesondere mindestens den Wert 3, vorzugsweise maximal den Wert 10, auf. Die Unterstützungsunterbrechung und das Wiedereinsetzen der Motorunterstützung werden dabei durch den Fahrer als "Ruckler" wahrgenommen. Durch das Erhöhen des Zählers bei jedem solcher "Ruckler" wird die Information erst nach einer bestimmten Anzahl ausgegeben. Damit kann eine zu häufige Ausgabe der Information beispielsweise bei nur einzelnen Aussetzern der Motorunterstützung, vermieden werden.

Weiterhin führt die Erfindung zu einem Elektrofahrrad, umfassend eine Antriebseinheit mit einem Sensorsystem, wobei das Sensorsystem einen Drehmomentsensor umfasst. Insbesondere ist der Drehmomentsensor als ein magnetoelastischer Sensor ausgebildet und vorzugsweise eingerichtet, um basierend auf einer Erfassung von Änderungen eines Magnetfeldes ein Drehmoment an einer Welle zu ermitteln. Zudem umfasst das Elektrofahrrad eine Steuereinheit, welche eingerichtet ist zur Durchführung des beschriebenen Verfahrens.

### Kurze Beschreibung der Zeichnungen

Nachfolgend wird ein Ausführungsbeispiel der Erfindung unter Bezugnahme auf die begleitenden Zeichnungen im Detail beschrieben. In der Zeichnung ist:
- Figur 1: eine vereinfachte schematische Ansicht eines Elektrofahrrads, bei dem ein Verfahren gemäß einem bevorzugten Ausführungsbeispiel der Erfindung durchgeführt wird,
- Figur 2: eine stark vereinfachte schematische Ansicht eines Sensorsystems des Elektrofahrrads der Figur 1,
- Figur 3: eine stark vereinfachte schematische Ansicht des Verfahrens gemäß dem bevorzugten Ausführungsbeispiel,
- Figur 4: eine stark vereinfachte schematische Ansicht verschiedener Betriebsmodi des Verfahrens des bevorzugten Ausführungsbeispiels, und
- Figur 5: vereinfachte schematische Ansichten von Signalverläufen während der Durchführung des Verfahrens gemäß dem bevorzugten Ausführungsbeispiel.

### Ausführungsformen der Erfindung

Bevorzugt sind alle gleichen Bauteile, Elemente und/oder Einheiten in allen Figuren mit den gleichen Bezugszeichen versehen.

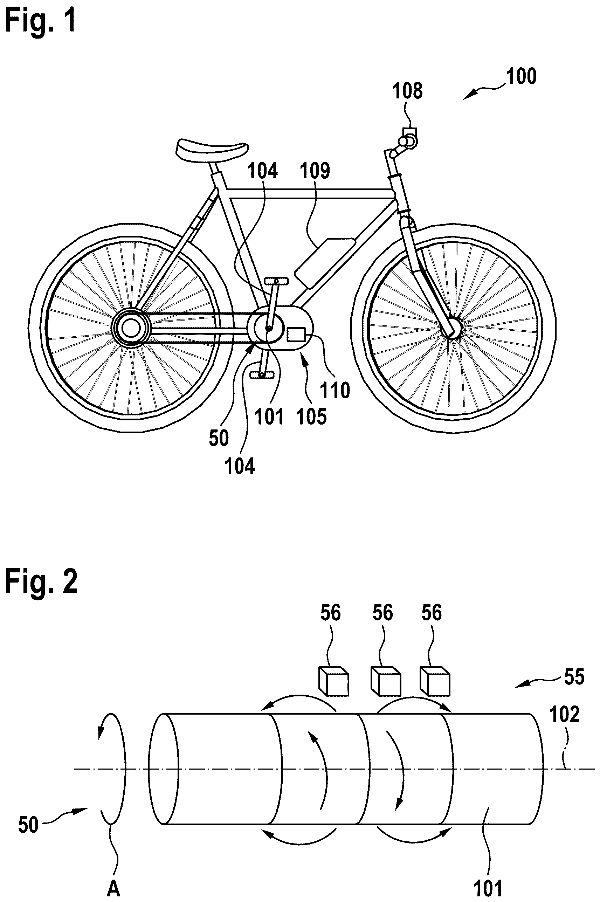

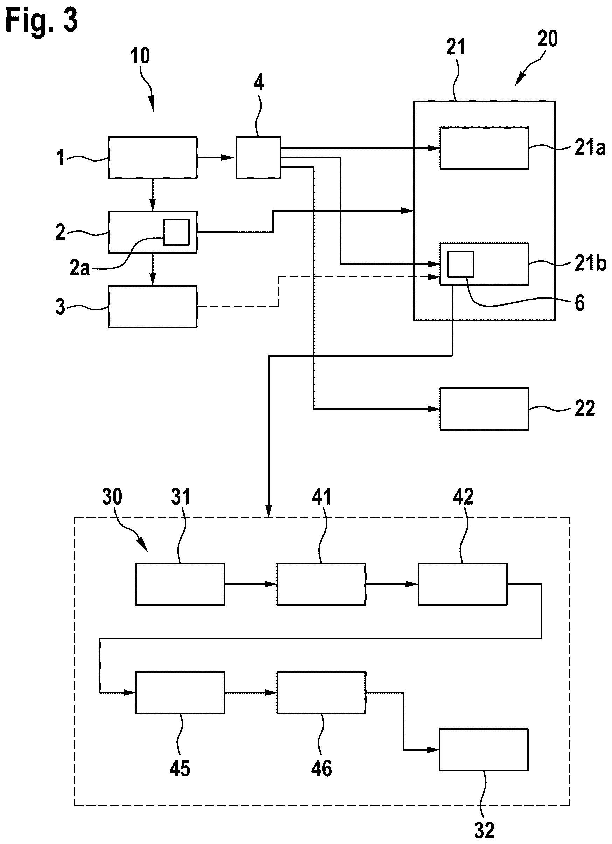

Figur 1 zeigt eine vereinfachte schematische Ansicht eines Elektrofahrrads 100, bei dem ein Verfahren 20 zum Betreiben einer Antriebseinheit 105 des Elektrofahrrads 100 gemäß einem bevorzugten Ausführungsbeispiel der Erfindung durchgeführt wird. In Figur 3 ist eine stark vereinfachte schematische Ansicht des Verfahrens 20 dargestellt. Das Verfahren 20 umfasst dabei ferner gemäß einem weiteren Aspekt der Erfindung ein Verfahren 10 zum Betreiben eines Sensorsystems 50 des Elektrofahrrads 100.

Die Antriebseinheit 105 des Elektrofahrrads 100 umfasst einen Motor, der insbesondere ein Elektromotor ist. Der Motor wird mittels eines elektrischen Energiespeichers 109 des Elektrofahrrads 100 mit elektrischer Energie versorgt. Die Antriebseinheit 105 ist im Bereich eines Tretlagers des Elektrofahrrads 100 angeordnet. Durch ein mittels des Motors der Antriebseinheit 105 erzeugten Motormoments kann eine durch Muskelkraft erzeugte Tretkraft eines Fahrers des Elektrofahrrads 100 motorisch unterstützt werden. Die Muskelkraft des Fahrers kann dabei über einen Kurbeltrieb mit Kurbeln 104 aufgebracht werden.

Insbesondere kann mittels der Kurbeln 104 die Tretkraft auf eine Welle 102 übertragen werden, welche insbesondere einer Tretwelle des Elektrofahrrads 100 entspricht. An die Welle 102 wird vorzugsweise zusätzlich das unterstützende Motormoment des Motors der Antriebseinheit 10 übertragen werden, vorzugsweise über ein Getriebe.

Der Betrieb der Antriebseinheit 105 erfolgt gesteuert mittels einer Steuereinheit 110 des Elektrofahrrads 100. Die Steuereinheit 110 ist dabei zudem eingerichtet zur Durchführung des Verfahrens 20.

Beim Betrieb der Antriebseinheit 105 wird die Antriebseinheit 105 derart gesteuert betätigt, um das Motormoment in Abhängigkeit des vom Nutzer erzeugten Tretmoments, das heißt in Abhängigkeit des Drehmoments an der Welle 101, zu erzeugen.

Die Erfassung des Drehmoments an der Welle 101 erfolgt dabei mittels des Sensorsystems 50 und des Verfahrens 10 zum Betreiben des Sensorsystems 50.

Das Sensorsystem 50 umfasst einen Drehmomentsensor 55, welcher als ein magnetoelastischer Sensor ausgebildet ist. Im Detail umfasst der Drehmomentsensor 55 insgesamt drei Sensorelemente 56, welche entlang einer zur Achse 102 der Welle 101 parallelen Richtung nebeneinander, insbesondere in gleichmäßigen Abständen, angeordnet sind (vergleiche Figur 2). Der Drehmomentsensor 55 ist dabei eingerichtet, um basierend auf einer Erfassung von Änderungen eines Magnetfelds das Drehmoment an der Welle 101 zu ermitteln.

Im Detail ist der Drehmomentsensor 55 eingerichtet, um die Änderungen des Magnetfelds, sowie im Detail eine homogene magnetische Flussdichte entlang der Achse 102 der Welle 101 zu erfassen. Alternativ oder zusätzlich bevorzugt kann der Drehmomentsensor 55 ausgebildet sein, um entlang weiterer Achsen die Eigenschaften des wirkenden Magnetfeldes zu erfassen. Beispielsweise kann der Drehmomentsensor 55 alternativ bevorzugt als dreiachsiger Sensor ausgebildet sein.

Bei dem Verfahren 10 zum Betreiben des Sensorsystems 50 erfolgt zunächst ein Erfassen 1 der homogenen magnetischen Flussdichte entlang der Achse 102 mittels des Drehmomentsensors 55. Gleichzeit erfolgt ein Ermitteln 2 des momentanen Drehmoments an der Welle 101 mittels des Drehmomentsensors 55.

Als Drehmoment wird dabei das momentane durch Muskelkraft von dem Nutzer des Elektrofahrrads aufgebrachte Tretmoment an der Welle 101 bestimmt. Die Berechnung erfolgt hierbei mittels der Steuereinheit 110 basierend auf dem magnetoelastischen Messprinzip des Drehmomentsensors 55.

Das Ermitteln 2 des Drehmoments umfasst dabei zusätzlich ein Kompensieren 2 der im Schritt 1 erfassten homogenen magnetischen Flussdichte. Das heißt, ein momentan wirkendes homogenes Magnetfeld wird, insbesondere durch bekannte Berechnungsmethoden kompensiert, sodass der Einfluss des homogenen Magnetfelds herausgerechnet und somit das tatsächliche Drehmoment an der Welle 101 besonders präzise ermittelt wird.

Weiterhin erfolgt bei dem Verfahren 10 ein Erkennen 3 eines Drehmomentfehlers bei dem im Schritt 2 ermittelten Drehmoment, wenn die im Schritt 1 erfasste homogene magnetische Flussdichte größer oder gleich einem vorbestimmten ersten Schwellwert ist.

Der erste Schwellwert ist bevorzugt ein sensorspezifischer konstanter Wert, welcher beispielsweise auf einer Kalibrierung und entsprechenden Parametrisierung der Messtechnik des Sensorsystems 50 basiert, und insbesondere vorbekannt ist.

Insbesondere wird dabei als Drehmomentfehler erkannt, dass das im Schritt 2 ermittelte Drehmoment größer ist als das tatsächlich an der Welle 101 anliegende Drehmoment. Das heißt, bei erkanntem Drehmomentfehler bildet das mittels des Drehmomentsensors 55 ermittelte Drehmoment eine Überschätzung des tatsächlichen Drehmoments.

Die Resultate bzw. Messwerte des Verfahrens 10 können dabei weiter verwendet werden für einen weiteren Betrieb des Elektrofahrrads 100, wie nachfolgend beschrieben.

Dabei umfasst das Verfahren 20 zum Betreiben der Antriebseinheit 105 ein gesteuertes Betreiben 21 der Antriebseinheit 105 in Abhängigkeit des ermittelten Drehmoments.

Bevorzugt erfolgt das Betreiben 21 der Antriebseinheit 105 dabei derart, dass ein Soll-Motormoment, welches von der Antriebseinheit 105 erzeugt werden soll, und insbesondere durch entsprechende Steuerung mittels der Steuereinheit 110 vorgegeben wird, dem im Schritt 2 ermittelten Drehmoment multipliziert mit einem Unterstützungsfaktor entspricht. Bevorzugt werden als Unterstützungsfaktor einer oder mehrere verschiedene konstante Werte verwendet, welche insbesondere durch einen Nutzer durch manuelles Einstellen eines gewünschten Unterstützungsmodus angepasst werden können.

Zudem erfolgt das gesteuerte Betreiben 21 der Antriebseinheit 105 in Abhängigkeit der im Schritt 1 erfassten homogenen magnetischen Flussdichte.

Im Detail umfasst das Betreiben 21 der Antriebseinheit 105 zwei verschiedene Betriebsmodi, welche in Abhängigkeit der erfassten homogenen magnetischen Flussdichte ausgewählt werden.

Dabei erfolgt vor der Verwendung im Schritt 21 ein Filtern 4 der erfassten homogenen magnetischen Flussdichte mittels eines Tiefpassfilters, um stark schwankende Magnetfelder zu glätten.

Wenn die erfasste homogene magnetische Flussdichte kleiner als ein vorbestimmter zweiter Schwellwert ist, erfolgt das Betreiben der Antriebseinheit 105 in einem Normalmodus 21a. Im Normalmodus 21a wird das im Schritt 2 ermittelte Drehmoment als Eingangsgröße einer Antriebseinheits-Steuerung verwendet. Das heißt, das mittels des Drehmomentsensors 55 erfasste Drehmoment wird direkt zur Steuerung der Antriebseinheit 105 verwendet.

Wenn die erfasste homogene magnetische Flussdichte größer oder gleich dem vorbestimmten zweiten Schwellwert ist, erfolgt das Betreiben der Antriebseinheit 105 in einem Degradationsmodus 21b. Im Degradationsmodus 21b wird als Eingangsgröße der Antriebseinheits-Steuerung ein degradiertes Drehmoment verwendet, welches kleiner als das ermittelte Drehmoment ist.

Das degradierte Drehmoment wird dabei durch Subtrahieren eines Degradationsmoments von dem erfassten Drehmoment bestimmt. Das Degradationsmoment kann dabei beispielsweise einen vorbestimmten konstanten Wert umfassen. Alternativ bevorzugt wird das Degradationsmoment basierend auf einem linearen Zusammenhang zwischen erfasstem Drehmoment, erfasster homogener magnetischer Flussdichte, dem zweiten Schwellwert, und einer vorbestimmten Konstante berechnet.

Bevorzugt entspricht der zweite Schwellwert dem ersten Schwellwert. Insbesondere kann somit auch der Schritt des Erkennens 3 des Drehmomentfehlers als Auslöser für den Degradationsmodus 21b verwendet werden.

Weiterhin erfolgt bei dem Verfahren 20, sofern die erfasste homogene magnetische Flussdichte einen dritten Schwellwert erreicht oder überschreitet ein Verhindern 22 des Betriebs der Antriebseinheit 105. Der dritte Schwellwert entspricht dabei vorzugsweise einem Vielfachen des zweiten Schwellwerts, insbesondere mindestens dem Dreifachen.

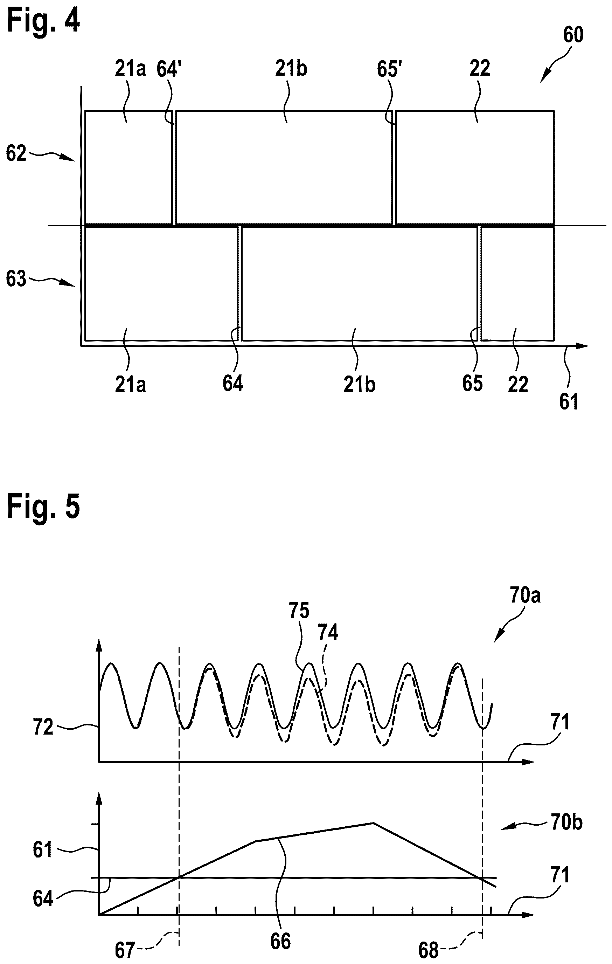

Die Figuren 4 und 5 veranschaulichen dabei die Vorgänge beim Betrieb des Elektrofahrrads 100. In Figur 5 sind beispielshaft schematisch vereinfachte Diagramme für einen Drehmomentverlauf (im Diagramm 70a) und einen beispielhaften vereinfachten schematischen Verlauf einer homogenen magnetischen Flussdichte (im Diagramm 70b) dargestellt. In beiden Diagrammen 70a und 70b sind die jeweiligen Verläufe jeweils über eine Zeit 71 dargestellt. Oben ist dabei das Drehmoment 72 und unten die homogene magnetische Flussdichte 61 als Hochachse gekennzeichnet. Dargestellt sind dabei der erfasste Drehmomentverlauf 75 sowie der degradierte Drehmomentverlauf 74 und der Verlauf 66 der erfassten homogenen magnetischen Flussdichte. Beispielsweise kann dieser Verlauf 66 beim Durchfahren eines starken Magnetfeldes auftreten.

Wie im unteren Diagramm 70b zu erkennen, übersteigt der Verlauf 66 zu einem ersten Zeitpunkt 67 den zweiten Schwellwert 64, und unterschreitet diesen zu einem zweiten Zeitpunkt 68 wieder. Vor und nach diesen Zeitpunkten 67, 68 wird somit die Antriebseinheit 105 im Normalmodus 21a betrieben, in welchem keine Degradation des Drehmoments erfolgt. Zwischen diesen beiden Zeitpunkten 67 und 68 wird der Degradationsmodus 21b ausgeführt, in welchem das erfasste Drehmoment 75 degradiert, das heißt verringert wird, um den degradierten Drehmomentverlauf 74 zu erhalten. Dieser degradierte Drehmomentverlauf 74 wird dabei für die Steuerung der Antriebseinheit 105 verwendet.

Ferner kann eine Erweiterung des Verfahrens 20 erfolgen, bei dem Sensitivitätsunterschiede von Sensorelementen 56 des Drehmomentsensors 55 berücksichtigt werden. Dargestellt sind dabei in Figur 4 zwei unterschiedliche Fälle 62 und 63, wobei der Fall 63 dem oben beschriebenen normalen Fall mit dem zweiten Schwellwert 64 und dritten Schwellwert 65 sowie der üblichen Durchführung von Normalmodus 21a, Degradationsmodus 21b und dem Verhindern 22 des Betriebs der Antriebseinheit 105 in Abhängigkeit der Schwellwerte 64, 65 und der erfassten homogenen magnetischen Flussdichte 61 erfolgt. Dieser Fall 63 entspricht einem Fall, dass keine Sensitivitätsunterschiede zwischen den Sensorelementen 56 des Drehmomentsensors 55 angenommen werden.

In dem anderen Fall 62 wird dabei angenommen, dass Sensitivitätsunterschiede zwischen den Sensorelementen 56 vorliegen können. In diesem anderen Fall werden jeweils angepasste Schwellwerte, nämlich ein angepasster zweiter Schwellwert 64' und ein angepasster dritter Schwellwert 65' verwendet. Die angepassten Schwellwerte 64' und 65' sind dabei kleiner als die für den Fall 63 ohne Sensitivitätsunterschiede verwendeten Schwellwerte 64 und 65. Vorzugsweise sind die angepassten Schwellwerte 64' und 65' jeweils um einen vorbestimmten Prozentsatz, beispielsweise von mindestens 10%, gegenüber den Schwellwerten 64 und 65 reduziert. Dadurch wird erreicht, dass der Degradationsmodus 21b und das Verhindern 22 des Betreibens der Antriebseinheit 105 früher, das heißt bei niedrigeren homogenen magnetischen Flussdichten 61, erfolgen.

Bevorzugt werden bei Verwendung der Berücksichtigung von Sensitivitätsunterschieden entsprechend der Figur 4 der Betrieb des Elektrofahrrads 100 derart durchgeführt, dass zunächst bei einem Betriebsstart des Elektrofahrrads 100 von dem Fall 62 mit möglichen Sensitivitätsunterschieden ausgegangen und dieser zuerst gestartet wird. Dabei kann während des Betriebs des Elektrofahrrads 100 in den anderen Fall 63 umgeschaltet werden, wenn basierend auf den Messwerten des Sensorsystems 50 erkannt wird, dass keine oder geringe Sensitivitätsunterschiede zwischen den Sensorelementen 56 vorliegen. Dies ist vorzugsweise dann möglich, wenn während einer erfassten homogenen magnetischen Flussdichte, welche beispielsweise größer als der angepasste zweite Schwellwert 64' ist, ein geringes Drehmoment erfasst wird. Dann kann davon ausgegangen werden, dass keine oder nur geringe Sensitivitätsunterschiede vorliegen, welche ansonsten zu einem größeren Drehmomentfehler und damit einem größeren Drehmoment führen würden.

Gemäß einem weiteren Aspekt der Erfindung ist zusätzlich bevorzugt ein weiteres Verfahren 30 zur Ausgabe von Informationen ein Betreiben des Elektrofahrrads 100 vorgesehen (vergleiche Figur 2).

Das Verfahren 30 wird dabei ausgeführt, wenn der Degradationsmodus 21b aktiv ist.

Bei dem Verfahren 30 erfolgt ein Ermitteln 31 einer Unterstützungsunterbrechung der Antriebseinheit 105 während des gesteuerten Betreibens, insbesondere während des Degradationsmodus 21b.

Die Unterstützungsunterbrechung wird vorzugsweise dadurch erkannt, dass die tatsächliche oder zu erzielende Motorunterstützung auf Null fällt. Alternativ oder zusätzlich bevorzugt erfolgt das Erkennen 31 der Unterstützungsunterbrechung, wenn der Degradationsmodus 21b bewirkt, dass das degradierte Drehmoment auf Null oder einen negativen Wert festgelegt wird.

Ferner erfolgt ein Erkennen 41 einer Pedalbetätigung des Elektrofahrrads 100 durch den Nutzer, ein Ermitteln 42 einer Geschwindigkeit des Elektrofahrrads 100, ein Erkennen 45 eines Wiedereinsetzens einer Motorunterstützung der Antriebseinheit 105, und ein Erhöhen 46 eines Zählers im Ansprechen auf jedes erkannte Wiedereinsetzen der Motorunterstützung nach jeweils einer erkannten Unterstützungsunterbrechung. Insbesondere wird der Zähler dabei nur erhöht, wenn jeweils während der Unterstützungsunterbrechung eine positive Pedalbetätigung und eine positive Geschwindigkeit des Elektrofahrrads 100 erkannt werden.

Wenn der Zähler einen vorbestimmten Zählerwert erreicht oder überschreitet, erfolgt anschließend eine Ausgabe 32 einer Information über die ermittelte Unterstützungsunterbrechung mittels einer Ausgabeeinheit 108 des Elektrofahrrads 100 an den Nutzer des Elektrofahrrads 100.

Beispielsweise kann dem Fahrer dabei in einem Display der Ausgabeeinheit 108 gezielt angezeigt werden, dass eine Unterstützungsunterbrechung erkannt wurde. Alternativ oder zusätzlich kann dem Nutzer hierbei der Hinweis gegeben werden, dass dieser weiterfahren soll und/oder dass kein Defekt oder Fehler vorliegt. Damit kann dem Nutzer insbesondere bewusst gemacht werden, dass durch die Unterstützungsunterbrechung und das anschließende Wiedereinsetzen der Motorunterstützung, was zu spürbaren Rucklern beim Fahren des Elektrofahrrads 100 führen kann, ein systembedingter Effekt der Betriebsweise des Elektrofahrrads 100, beispielsweise aufgrund von Umwelteinflüssen, ist. Somit kann beispielsweise darauf hingewiesen werden, dass kein unbekannter Defekt oder keine unbekannte Fehlfunktion des Elektrofahrrads 100 vorliegt, wodurch insbesondere die Akzeptanz der spürbaren Ruckler verbessert und ein Eindruck von potentiellen Defekten oder Fehlfunktionen vermieden werden kann.

## Patentansprüche

1. Verfahren zum Betreiben eines Elektrofahrrads (100), wobei das Elektrofahrrad (100) ein Sensorsystem (50) mit einen Drehmomentsensor (55) umfasst, umfassend die Schritte:
- Ermitteln (2) eines Drehmoments an einer Welle (101) des Elektrofahrrads mittels des Drehmomentsensors (55),
- gesteuertes Betreiben (21) einer Antriebseinheit (105) des Elektrofahrrads (100) in Abhängigkeit des ermittelten Drehmoments,
- Ermitteln (31) einer Unterstützungsunterbrechung der Antriebseinheit (105) während des gesteuerten Betreibens (21), und
- Ausgabe (32) einer Information über die ermittelte Unterstützungsunterbrechung mittels einer Ausgabeeinheit (108) an einen Nutzer des Elektrofahrrads (100).

2. Verfahren nach Anspruch 1, wobei der Drehmomentsensor (55) als ein magnetoelastischer Sensor ausgebildet ist und eingerichtet ist, um basierend auf einer Erfassung von Änderungen eines Magnetfeldes das Drehmoment an der Welle (101) zu ermitteln.

3. Verfahren nach Anspruch 2, ferner umfassend die Schritte:
- Erfassen (1) einer homogenen magnetischen Flussdichte mittels des Drehmomentsensors (55), und
- Erkennen (3) eines Drehmomentfehlers des ermittelten Drehmoments, wenn die erfasste homogene magnetische Flussdichte größer oder gleich einem vorbestimmten ersten Schwellwert ist.

4. Verfahren nach Anspruch 3, wobei das gesteuerte Betreiben (21) der Antriebseinheit (105) umfasst:
- Betreiben der Antriebseinheit (105) in einem Normalmodus (21a), wenn die erfasste homogene magnetische Flussdichte kleiner als ein vorbestimmter zweiter Schwellwert ist, und
- Betreiben der Antriebseinheit (105) in einem Degradationsmodus (21b), wenn die erfasste homogene magnetische Flussdichte größer oder gleich dem vorbestimmten zweiten Schwellwert ist,
- wobei im Normalmodus (21a) das ermittelte Drehmoment als Eingangsgröße einer Antriebseinheits-Steuerung verwendet wird,
- wobei im Degradationsmodus (21b) ein degradiertes Drehmoment als Eingangsgröße der Antriebseinheits-Steuerung verwendet wird, und
- wobei das degradierte Drehmoment kleiner als das ermittelte Drehmoment ist.

5. Verfahren nach Anspruch 4, wobei das degradierte Drehmoment durch Subtrahieren eines vorbestimmten konstanten Degradationsmoments von dem erfassten Drehmoment bestimmt wird, oder wobei das degradierte Drehmoment mittels der Formel bestimmt wird: ${T}_{deg} = {T}_{mess} - \left({B}_{mess}-{B}_{limitDeg}\right) ∗ k$ mit dem degradierten Drehmoment *T_{deg}*, dem erfassten Drehmoment *Tₘₑₛₛ*, der erfassten homogenen magnetischen Flussdichte *Bₘₑₛₛ*, dem zweiten Schwellwert *B_{limitDeg}*, und einer Konstanten *k.*

6. Verfahren nach einem der Ansprüche 4 oder 5, wobei das Ermitteln (31) der Unterstützungsunterbrechung und die Ausgabe (32) der Information, insbesondere nur, während des Degradationsmodus (21b) durchgeführt wird.

7. Verfahren nach einem der Ansprüche 4 bis 6, wobei die Ausgabe (32) einer Information über die ermittelte Unterstützungsunterbrechung erfolgt, wenn das ermittelte degradierte Drehmoment kleiner oder gleich einem vorbestimmten Mindest-Drehmoment, insbesondere von Null, ist.

8. Verfahren nach einem der vorhergehenden Ansprüche, ferner umfassend den Schritt:
- Erkennen (41) einer Pedalbetätigung des Elektrofahrrads (100) durch den Nutzer,
wobei das Ermitteln (31) der Unterstützungsunterbrechung und die Ausgabe (32) der Information, insbesondere nur, bei erkannter Pedalbetätigung durchgeführt wird.

9. Verfahren nach einem der vorhergehenden Ansprüche, ferner umfassend den Schritt:
- Erkennen (41) einer Pedalbetätigung des Elektrofahrrads (100) durch den Nutzer,
wobei das Ermitteln (31) der Unterstützungsunterbrechung und die Ausgabe (32) der Information, insbesondere nur, bei erkannter Pedalbetätigung durchgeführt wird.

10. Verfahren nach einem der vorhergehenden Ansprüche, ferner umfassend die Schritte:
- Erkennen (45) eines Wiedereinsetzens einer Motorunterstützung der Antriebseinheit (105), und
- Erhöhen (46) eines Zählers im Ansprechen auf ein erkanntes Wiedereinsetzen der Motorunterstützung nach einer erkannten Unterstützungsunterbrechung,
wobei die Ausgabe (32) der Information nur erfolgt, wenn der Zähler einen vorbestimmten Zählerwert erreicht oder überschreitet.

11. Elektrofahrrad, umfassend:
- eine Antriebseinheit (105) mit einem Sensorsystem (50), wobei das Sensorsystem (50) einen Drehmomentsensor (55) umfasst, insbesondere welcher als ein magnetoelastischer Sensor ausgebildet ist, und insbesondere welcher eingerichtet ist, um basierend auf einer Erfassung von Änderungen eines Magnetfeldes ein Drehmoment an einer Welle (101) zu ermitteln, und
- eine Steuereinheit (110), welche eingerichtet ist zur Durchführung eines Verfahren (20) nach einem der vorhergehenden Ansprüche.
